# EUROPÄISCHE PATENTSCHRIFT

(11) **EP 3 264 387 B1**
(45) Veröffentlichungstag und Bekanntmachung des Hinweises auf die Patenterteilung: **23.10.2019**
(21) Anmeldenummer: 17168109.1
(22) Anmeldetag: 26.04.2017
(51) Int. Cl.: G08C 17/02

(54) **VERFAHREN ZUM BETREIBEN EINES BATTERIEBETRIEBENEN BEDIENGERÄTES SOWIE BATTERIEBETRIEBENES BEDIENGERÄT**
METHOD FOR OPERATING A BATTERY-OPERATED OPERATING DEVICE AND BATTERY-OPERATED OPERATING DEVICE
PROCÉDÉ DE FONCTIONNEMENT D'UN APPAREIL DE COMMANDE À BATTERIE ET APPAREIL DE COMMANDE À BATTERIE

(30) Priorität: 29.06.2016 DE 102016111867
(43) Veröffentlichungstag der Anmeldung: 03.01.2018
(73) Patentinhaber: Insta GmbH, 58509 Lüdenscheid (DE)
(72) Erfinder: Neuhaus, Stefan, 44289 Dortmund (DE); Sangermann, Marc, 44139 Dortmund (DE); Staats, Thomas Reinhard, 58515 Lüdenscheid (DE); Becker-Hennecke, Ralph, 58239 Schwerte (DE)

(56) Entgegenhaltungen:
- CN-A- 103 295 298
- CN-U- 203 352 244
- DE-A1- 10 015 841
- US-A1- 2015 371 534

## Beschreibung

Die Erfindung betrifft ein Verfahren zum Betreiben eines als Stand-alone-Gerät ausgelegten batteriebetriebenen, einen Mikrocontroller aufweisenden Bediengerätes, als Teil einer Gebäudeinstallation, bei welchem Verfahren das Bediengerät zum Reduzieren seines Stromverbrauchs in unterschiedliche Modi geschaltet wird, von denen ein erster Modus des Bediengerätes derjenige Modus ist; in dem der oder die an eine manuelle Sensorbetätigung geknüpften Befehle abgesetzt werden, und von denen ein zweiter Modus ein Ruhe-Modus ist, in den das Betriebsgerät nach Abschluss der ausgeführten Aktion geschaltet wird. Ferner umfasst die Erfindung ein batteriebetriebenes Bediengerät zum Bedienen einer Gebäudeinstallation, welches Bediengerät zumindest einen manuell betätigbaren Sensor, einen Mikrocontroller, einen Sender zum Übermitteln eines Bedienbefehls sowie als Stromquelle eine Batterie umfasst, welches Bediengerät zum Reduzieren seines Stromverbrauchs in unterschiedliche Modi schaltbar ist, von denen ein erster Modus derjenige Modus ist, in dem der oder die an eine manuelle Sensorbetätigung geknüpften Befehle abgesetzt werden, und von denen ein zweiter Modus ein Ruhe-Modus ist, in dem die Stromverbraucher des Bediengerätes stromlos geschaltet sind.

In einem Gebäude sind unterschiedliche Installationen eingebaut, beispielsweise Beleuchtungseinrichtungen, eine Heizeinrichtung, gegebenenfalls eine Klimatisierungseinrichtung, elektrische Jalousien und dergleichen. Diese und andere Installationen in einem Gebäude sind im Rahmen dieser Ausführung zusammengefasst als Gebäudeinstallation angesprochen. Gebäudeinstallationen sind in vielen Fällen an einen Gebäudeinstallationsbus angeschlossen und werden über diesen angesteuert. Durchaus möglich ist auch die Ansteuerung einer Installation, beispielsweise raumbezogen, ohne einen Gebäudeinstallationsbus. Zum Betätigen einer solchen Gebäudeinstallation, beispielsweise das Einschalten der Raumbeleuchtung, werden Sensoren, zumeist Tastsensoren, aber auch Bedienpanels eingesetzt. In vielen Fällen sind diese gebäudeseitig, typischerweise wandseitig, verbaut und leitungsgebunden an den Gebäudestationsbus oder an die Gebäudeinstallation angeschlossen. Es gibt auch Anwendungsfälle, bei denen Bediengeräte als sogenannte Stand-alone-Geräte ausgelegt sind. Diese Bediengeräte sind nicht leitungsgebunden an eine Stromversorgung oder einen Gebäudeinstallationsbus angeschlossen. Dieses hat den Vorteil, dass derartige Bediengeräte an beliebiger Stelle innerhalb eines Raumes montiert werden können. Auch bei tragbaren Bediengeräten handelt es sich um sogenannte Stand-alone-Bediengeräte. Diese Geräte sind für ihre Stromversorgung mit einer Batterie ausgestattet. Zum Reduzieren des Stromverbrauchens eines solchen Stand-alone-Bediengerätes, wird dieses in unterschiedliche Modi geschaltet, die sich durch ihren Stromverbrauch unterscheiden. Bei vorbekannten Geräten der in Rede stehenden Art ist ein erster Modus der übliche Betriebs-Modus, indem eine manuelle Sensorbetätigung erfasst, ausgewertet und der oder die daran geknüpften Befehle abgesetzt werden. Damit Tasterbestätigungen die nur sehr selten, bezogen auf die Dauer eines Tages, vorkommen, wie dieses beispielsweise bei einem Ein- oder Ausschalten der Raumbeleuchtung der Fall ist, wird zum Reduzieren des Stromverbrauches das Bediengerät nach Ausüben einer Aktion, also: beispielsweise dem Einschalten der Raumbeleuchtung, in seinen Ruhe-Modus geschaltet. In diesem Modus bleibt zum Erfassen einer Sensorbetätigung der Mikrocontroller in Betrieb. Dieses ist auch in einem zum Teil heruntergefahrenen Betriebs-Modus beispielsweise mit geringerer Taktfrequenz und/oder teilweise deaktivierter Peripherie möglich. Dadurch ist der Stromverbrauch reduziert. Wird, wenn sich das Bediengerät in seinem Ruhe-Modus befindet, eine Sensorbetätigung erfasst, wird das Bediengerät durch den Mikrocontroller wieder in seinen Betriebs-Modus geschaltet und die zuvor abgeschalteten oder in einen reduzierten Stromverbrauch geschalteten Stromverbraucher bestromt bzw. hochgefahren.

Auch wenn auf diese Weise der Stromverbrauch reduziert und damit die Zyklen zum Ersetzen der Batterie des Bediengerätes bereits verlängert sind gegenüber einer Ausgestaltung eines Bediengerätes ohne Möglichkeit, dieses in einen Ruhe-Modus zu schalten, wird ein Batteriewechsel in vielen Fällen als nachteilig angesehen. Dieses gilt vor allem für solche Stand-alone-Bediengeräte, die wandseitig installiert sind. In vielen Fällen verfügen diese über designerisch hochwertige Blenden, die im Zuge eines Batteriewechsels notwendigerweise zunächst demontiert und anschließend wieder montiert werden müssen. Derartige Tätigkeiten bergen immer die Gefahr einer Beschädigung der hochwertigen Designoberfläche in sich. Mitunter sind derartige Bediengeräte in Unterputzdosen verbaut. Daher ist die Größe einer für die Stromversorgung einzusetzenden Batterie begrenzt, so dass auch auf diese Weise nennenswerte Verlängerung der Betriebsdauer ohne Batteriewechsel, wenn überhaupt, nur in Grenzen möglich ist. Das vorstehende gilt in besonderem Maße für solche Anwendungen, bei denen derartige Bediengeräte sehr flach ausgelegt und beispielsweise auf eine Wand geklebt oder geschraubt sind. Aufgrund des bei einer solchen Ausgestaltung nur sehr gering zur Verfügung stehenden Einbauraumes werden als Batterien Knopfzellen eingesetzt.

Aus CN 203352244 U ist ein Fernbedienungsschaltkreis für batteriebetriebene 6 bis 12 V Fernbedienungen bekannt, der zum Ziel hat, die Leistungsaufnahme während der Nichtaktivität zu minimieren. Eine Stromlosschaltung sämtlicher Verbraucher bei Nichtaktivität wird nicht erreicht.

CN 103295298 A offenbart einen Schlüssel für die Fernbedienung von Fahrzeugen. Dem beim Gegenstand dieses Standes der Technik eingesetzten Mikrocontroller ist eine Triggerschaltung nachgeschaltet. Somit wird der Mikrocontroller unmittelbar durch einen Sensor angesprochen, sobald dieser betätigt wird. Ist der Mikrocontroller hochgefahren, wird von diesem eine Triggerschaltung angesteuert, durch die der Strom durchgeschaltet wird. Die Stromverbraucher dieses vorbekannten Bediengerätes sind im Ruhe-Modus sämtlich stromlos. In den Ruhe-Modus wird dieses Bediengerät durch ein vom Mikrocontroller abgesetztes Ausschaltsignal gebracht, durch das die Triggerschaltung hinsichtlich ihres Schaltzustandes geöffnet wird. Problematisch bei diesem Stand der Technik ist, dass beim Ausschalten durch nicht kontrollierbare systemseitige Entladungsvorgänge Spannungen am Sensoreingang des Mikrocontrollers anliegen können, wodurch dieser ungewollt erneut hochfährt und die Bestromung durchschaltet.

Ausgehend von diesem diskutierten Stand der Technik liegt der Erfindung daher die Aufgabe zugrunde, ein Verfahren zum Betreiben eines als Stand-alone-Gerät ausgelegten batteriebetriebenen Bediengerätes, als Teil einer Gebäudeinstallation vorzuschlagen, bei dem der Stromverbrauch signifikant gegenüber herkömmlichen Bediengeräten reduziert ist und auf diese Weise ein Batteriewechsel entweder innerhalb der erwarteten Lebensdauer des Bediengerätes nicht mehr erforderlich ist oder die Batteriewechselintervalle signifikant verlängert sind, sondern bei dem auch unerwünschte Einschaltvorgänge im Zusammenhang mit dem Ausschaltvorgang vermieden sind. Der Erfindung liegt zudem die Aufgabe zugrunde, ein batteriebetriebenes Bediengerät vorzuschlagen, mit dem diesem Wunsche ebenfalls Rechnung getragen wird.

Gelöst wird die verfahrensbezogene Aufgabe erfindungsgemäß durch ein eingangs genanntes, gattungsgemäßes Verfahren, bei dem zum Erreichen des Ruhe-Modus alle Stromverbraucher einschließlich des Mikrocontrollers des Bediengerätes stromlos geschaltet werden, bei dem im Ruhe-Modus die Schaltstellung des oder der mechanischen Sensoren mittels einer ein Flip-Flop und eine elektronische Schalteinheit aufweisenden Triggerschaltung überwacht wird und bei dem als Folge einer manuellen Betätigung eines Sensors der Eingang der elektronischen Schaltereinheit über eine zwischen dem Set-Eingang und dem Ausgang des Flip-Flops angeordnete Kurzschlussleitung mit Strom beaufschlagt wird, der Microcontroller und die Stromverbraucher hierdurch bestromt werden, das Flip-Flop betriebsbereit wird und der Ausgang des Flip-Flops auf eine logische 1 gesetzt wird, sodass die Bestromung auch bei einem geöffneten Sensor sichergestellt bleibt, damit dann die durch die Sensorbetätigung gewünschte Aktion ausgeführt wird, bevor das Bediengerät wieder in seinen vorbeschriebenen Ruhe-Modus geschaltet wird, indem der Ausgang des Flip-Flops auf eine logische 0 gesetzt wird, wodurch die elektronische Schaltereinheit das Ansteuersignal zum Umschalten erhält.

Die vorrichtungsbezogene Aufgabe wird erfindungsgemäß durch ein eingangs genanntes, gattungsgemäßes Bediengerät gelöst, bei dem das Bediengerät eine Triggerschaltung aufweist, durch die bei einer Sensorbetätigung eines mechanischen Sensors im Ruhe-Modus des Bediengerätes die in diesem Modus stromlosen Verbraucher bestromt werden, und bei dem der Mikrocontroller Zugriff auf einen nicht-flüchtigen Speicher hat, in dem eine Routine zum Hochfahren des Mikrocontrollers und/oder Betriebsparameter abgelegt sind, wobei die Triggerschaltung ein Flip-Flop und eine elektronische Schaltereinheit umfasst, an dessen Set-Eingang der Sensor angeschlossen ist, sodass eine Sensorbetätigung diesen Eingang mit einer logischen 1 belegt, und an dessen Ausgang der eine Anschluss einer elektronischen Schalteinrichtung anliegt, wobei zwischen dem Set-Eingang und dem Ausgang des Flip-Flops eine Kurzschluss-Leitung angeordnet ist, wobei der Mikrocontroller eine Abschaltschnittstelle zum Ausgeben eines Abschaltsignals aufweist, die an dem Reset-Eingang des Flip-Flops anliegt.

Bei diesem Verfahren und bei dem batteriebetriebenen Bediengerät unterscheidet sich der Ruhe-Modus von herkömmlichen Ruhe-Modi dadurch, dass in diesem Modus sämtliche Stromverbraucher stromlos geschaltet sind. In diesem Modus wird somit grundsätzlich kein Strom, jedenfalls kein nennenswerter Strom, verbraucht. Gemäß der Erfindung wird dieses dadurch möglich gemacht, dass zur Überwachung einer Sensorbetätigung nicht der Mikrocontroller, sondern eine Triggerschaltung genutzt wird. Die Triggerschaltung verbraucht bei Nichtaktivität jedenfalls aktiv keinen Strom. Sämtliche Stromverbraucher des Bediengerätes, und somit sein Mikrocontroller, der Sender, oder, falls das Bediengerät auch über Funk Datentelegramme empfangen kann, sein Transceiver sind in dem Ruhe-Modus stromlos geschaltet. Dieses umfasst auch ein Stromlosschalten des Taktgebers. Man hat sich bei dem erfindungsgemäßen Konzept gegenüber der im Stand der Technik vorherrschenden Lehre hinweggesetzt, man könne zur Reduzierung eines Stromverbrauchers den Taktgeber zwar auf eine niedrigere Frequenz herunterfahren, diesen jedoch nicht ausschalten, da ein Hochfahren und Einschwingen des Systems zu lange dauern würde, was eine spürbare Verzögerung in der Ausübung der gewünschten Aktion zur Folge hätte. Im Stand der Technik werden als Taktgeber Quarz-Oszillatoren verwendet. Sollen diese nicht zu kostenträchtig sein, was bei Bediengeräten der in Rede stehenden Art der Fall ist, benötigen diese ein bis zwei Sekunden, um eingeschwungen zu sein. Damit ist ein Betrieb des Mikrocontrollers und ein Absetzen eines Ansteuerbefehls erst möglich, wenn der Taktgeber eingeschwungen ist. Eine durch eine Sensorbetätigung nutzerseitig gewünschte Aktion wird damit erst mit entsprechender Verzögerung ausgeführt. Bei dem Konzept der Erfindung wird vorzugsweise ein in sehr kurzer Zeit eingeschwungener Taktgeber verwendet. Ausgenutzt wird der Umstand, dass die in Rede stehenden Bediengeräte keinen größeren Temperaturschwankungen ausgesetzt sind, weshalb sich als Taktgeber für diese ohne weiteres auch RC-Oszillatoren eignen. Für das Absetzen eines vordefinierten Ansteuerbefehls beeinträchtigen Schwankungen in der Taktfrequenz die Ausführungen dieses Befehls nicht spürbar. RC-Oszillatoren sind in einem Bruchteil derjenigen Zeit eingeschwungen, die ein üblicher Quarz-Oszillator benötigen würde. Daher können auch diejenigen Stromverbraucher, wie beispielsweise der Mikrocontroller, im Ruhe-Modus vollständig heruntergefahren sein und somit keinen Strom verbrauchen. Zudem ist ein RC-Oszillator typischerweise ohnehin Teil eines Mikrocontrollers.

Zum Bestromen der Triggerschaltung verfügt das Bediengerät über zumindest einen mechanischen Sensor, an dessen Betätigung ein oder mehrere Bedienbefehle geknüpft sind. Unter dem im Rahmen dieser Ausführungen benutzten Begriff "mechanischer Sensor" ist jedweder manuell betätigbarer Sensor zu verstehen, bei dem zum Ausführen eines Schaltvorganges zumindest zwei Kontakte gegeneinander bewegt werden. Somit kann es sich bei derartigen Sensoren um Tastsensoren, Drehsensoren oder dergleichen handeln, durchaus auch als Mikrotaster ausgelegt.

Möglich ist auch die Ausgestaltung eines Bediengerätes, welches neben mechanischen Sensoren auch andere Sensoren aufweist, die allerdings nur dann betätigt werden können, wenn sich das Bediengerät nicht im Ruhe-Modus befindet.

Das Bediengerät verfügt des Weiteren über einen nicht-flüchtigen Speicher, in dem die Parametrierung des Bediengerätes sowie eine Routine für das Hochfahren des Mikrocontrollers abgelegt sind. Dadurch ist sichergestellt, dass auch für den Erhalt von den für einen Betrieb notwendigen Daten kein Strom verbraucht wird. Sich während des Bedien-Modus einstellende Änderungen in der Parametrierung werden unverzüglich in dem nicht-flüchtigen Speicher gespeichert.

Bei einer Sensorbetätigung zum Ansteuern einer bestimmten Aktion, beispielsweise zum Ein- oder Ausschalten einer Raumbeleuchtung, wird die Triggerschaltung bestromt, was wiederum zu einer Bestromung des Taktgebers und der übrigen Stromverbraucher, wie beispielsweise den Mikrocontroller und den Sender oder Transceiver führt. Durch eine Betätigung des beispielsweise als Tastsensor ausgelegten Sensors wird somit eine elektrische Verbindung zwischen dem diesbezüglichen Eingang der Triggerschaltung und der Batterie hergestellt. Bei Einsatz eines in sehr kurzer Zeit (quasi spontan) einschwingenden Oszillators, wie beispielsweise eines RC-Oszillators, ist der Betriebs-Modus in so kurzer Zeit hergestellt, dass das Absetzen des durch die Sensorbetätigung gewünschten Ansteuerbefehls, beispielsweise das Ein- oder Ausschalten von Licht, nicht spürbar verzögert wird. Es gibt andere Gebäudeinstallationen, bei denen eine Verzögerung ohne Relevanz wäre, beispielsweise das Ansteuern einer Heizungs- und/oder Klimatisierungsanlage, wenn durch die Ansteuerung der raumbezogene Soll-Wert geändert wird. Ein quasi spontanes Einschwingen des Taktgebers, wie dieses beispielsweise mit einem RC-Oszillator möglich ist, hat zur Folge, dass eine Sensorauswertung bereits nach kurzer Zeit und somit im Rahmen der Dauer einer typischerweise durchgeführten Sensorbetätigung erfolgen kann.

Ist die gewünschte Aktion ausgeführt, also: der oder die an eine Sensorbetätigung geknüpften Ansteuerbefehle abgesetzt, wird das Bediengerät wieder in seinen vorbeschriebenen Ruhe-Modus geschaltet, in dem sämtliche Stromverbraucher des Bediengerätes stromlos sind.

Die signifikante Stromeinsparung gegenüber herkömmlichen Bediengeräten der in Rede stehenden Art, und zwar durchaus um einen Faktor 1000, liegt darin begründet, dass in den Nicht-Benutzungsphasen, wenn sich das Bediengerät im Ruhe-Modus befindet, kein Strom verbraucht wird. Die Anteile der Ruhe-Modi sind bezogen auf einen Tagesgang, der weitaus größte Anteil. Für das Absetzen eines Befehls, wenn beispielsweise ein RC-Oszillator eingesetzt wird, wird deutlich weniger als eine Sekunde benötigt. Wenn man davon ausgeht, dass beispielsweise bei einer Lichtansteuerung im Gang eines Tages das Licht mittels des Bediengerätes einige Male, vielleicht vier bis achtmal, angesteuert wird, addiert sich diejenige Zeit, in der sich das Bediengerät im Betriebs-Modus befinden muss, allenfalls auf einige wenige Sekunden. Während des gesamten Restes des Tages (24 Stunden abzüglich der wenigen Sekunden) verbraucht das Bediengerät hingegen keinen Strom. Vorbekannte Bediengeräte dieser Art, wenn auch in einem bestimmten heruntergefahrenen Modus geschaltet, verbrauchen auch in diesen Nicht-Benutzungsphasen des Bediengerätes dauerhaft Strom.

Mit dem erfindungsgemäßen Verfahren und mit dem erfindungsgemäßen Bediengerät können in vielen Fällen über die Lebensdauer eines solchen Bediengerätes Batteriewechsel gänzlich vermieden werden. Von besonderem Vorteil ist auch, dass für die Integration einer solchen Triggerschaltung kein nennenswerter Bauraum benötigt wird und sich diese somit ohne weiteres mit den ansonsten benötigten Modulen des Bediengerätes in ein Einbaugehäuse integrieren lässt.

Um nach Feststellen einer ersten Sensorbetätigung und Absetzen des an die Sensorbetätigung geknüpften Befehls im Zuge einer im zeitlichen Zusammenhang mit dieser Sensorbetätigung folgenden zweiten Sensorbetätigung das Bediengerät nicht aus einem zwischenzeitlich herbeigeführten Ruhe-Modus erneut in den Betriebs-Modus bringen zu müssen, ist in einer Weiterbildung vorgesehen, dass nach Absetzen des an eine erste Sensorbetätigung geknüpften Befehls das Bediengerät für eine bestimmte Zeitspanne von vielleicht 5 bis 10 Sekunden zunächst in einen Überwachungs-Modus geschaltet wird. In diesem sind bereits einige Stromverbraucher heruntergefahren, um auch in diesem Modus den Stromverbrauch gering zu halten. Bei dem Überwachungs-Modus handelt es sich letztendlich um einen Modus, der bei herkömmlichen Bediengeräten der Ruhe-Modus ist. Wenn innerhalb der vorgegebenen Zeitspanne keine erneute Sensorbetätigung detektiert wird, schaltet das Bediengerät in seinen Ruhe-Modus, in dem dann sämtliche Stromverbraucher stromlos geschaltet sind.

Die Triggerschaltung eines solchen Bediengerätes umfasst ein Flip-Flop, insbesondere ein monostabiles Flip-Flop, an dessen S-Eingang der Sensor angeschlossen ist. Eine Betätigung des Sensors führt somit zu einer Strombeaufschlagung dieses Einganges, der sodann mit einer logischen 1 belegt wird. An den Ausgang des Flip-Flops ist eine elektronische Schalteinrichtung angeschlossen, durch die sodann die Bestromung der Stromverbraucher und ebenfalls des Flip-Flops herbeigeführt wird. Als Flip-Flop wird vorzugsweise ein RS-Flip-Flop eingesetzt.

Der R-Eingang des Flip-Flops ist an eine Abschaltschnittstelle des Mikrocontrollers angeschlossen, über die ein Abschaltsignal ausgegeben wird, wenn das Bediengerät in seinen Ruhe-Modus geschaltet werden soll.

Die Erfindung ist nachstehend anhand eines Ausführungsbeispiels unter Bezugnahme auf die beigefügten Figuren beschrieben. Es zeigen:
- **Fig. 1:**: Eine Schaltungsanordnung eines batteriebetriebenen Bediengerätes,
- **Fig. 2:**: die Schaltungsanordnung der Figur 1 nach Betätigen eines Sensors des Bediengerätes,
- **Fig. 3:**: die Schaltungsanordnung der Figur 1 in einem zeitlich nachfolgenden Zustand nach demjenigen der Figur 2, und zwar in seinem Bedien-Modus,
- **Fig.4:**: die Schaltungsanordnung der Figur 1 in ihrem Überwachungsmodus,
- **Fig. 5:**: die Schaltungsanordnung der Figur 1 zum Zeitpunkt des Absetzens eines Befehles, in den Ruhe-Modus überzugehen und
- **Fig. 6:**: Diagramme zum Darstellen der mittleren Stromaufnahme bei Verwendung der in den Figuren 1 bis 5 gezeigten Schaltungsanordnung im Vergleich zu der mittleren Stromaufnahme eines herkömmlichen batteriebetriebenen Bediengerätes.

Ein batteriebetriebenes Bediengerät zum Bedienen einer Gebäudeinstallation verfügt über mehrere Sensoren, die beispielhaft als Tastsensoren ausgeführt sind. Das Bediengerät umfasst sechs oder acht derartige Sensoren. Es versteht sich, dass die Anzahl der Sensoren bezüglich der Erfindung ohne Bedeutung ist und daher ein solches Bediengerät eine beliebige Anzahl manuell betätigbaren mechanischen Sensoren, die beispielsweise als Tastsensoren ausgebildet sein können, verfügen kann. Neben den manuell betätigbaren Sensoren weist das Bediengerät einen Mikrocontroller 1, einen Transceiver zum Übermitteln und Empfangen von Bedienbefehlen und eine Batterie 2 als Stromquelle. Bei dem dargestellten Ausführungsbeispiel ist der Transceiver Teil des Mikrocontrollers 1. Darüber hinaus umfasst das Bediengerät eine Triggerschaltung 3, durch die bei einer Sensorbetätigung im Ruhe-Modus des Bediengerätes die in diesem Modus stromlosen Verbraucher bestromt werden. Zugehörig zu dem Mikrocontroller 1 ist des Weiteren ein nichtflüchtiger Speicher (nicht dargstellt), auf dem Betriebsparameter abgelegt sind, ebenso wie ein so genannter Stack als Routine für das Hochfahren des Mikrocontrollers. Der Mikrocontroller 1 verfügt des Weiteren über einen RC-Oszillator als Taktgeber.

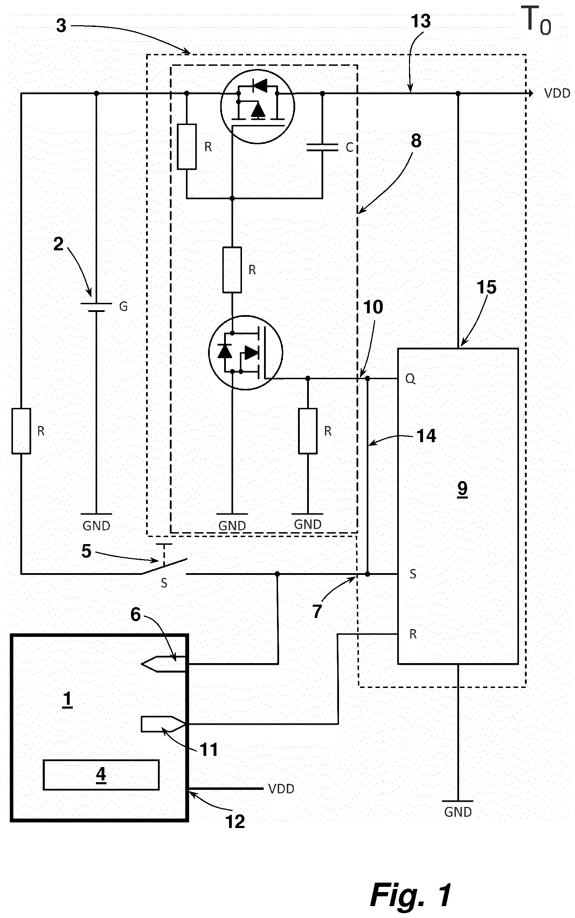

In dem Blockschaltbildern der Figuren 1 bis 5 ist einer der mehreren Tastsensoren mit den Bezugszeichen 5 kenntlich gemacht. Der Einfachheit halber ist in den Figuren nur ein Tastsensor 5 eingezeichnet. Die weiteren Tastsensoren sind parallel zu dem Tastsensor 5 geschaltet, so dass die nachstehenden Ausführungen zu dem Tastsensor 5 für die weiteren Tastsensoren gleichermaßen gelten.

Der Tastsensor 5 ist an die Batterie 2 angeschlossen und ist in die diesbezügliche Stromversorgungsleitung für den Mikrocontroller 1 und die Triggerschaltung 3 eingeschaltet. Der Tastsensor 5 ist mit seinem anderen Zweig an einen ersten Tastereingang 6 des Mikrocontrollers 1 und an einen ersten Eingang 7 der Triggerschaltung 3 angeschlossen. Die weiteren, in den Figuren nicht dargestellten Tastsensoren sind ebenfalls an den Eingang 7 der Triggerschaltung 3 und jeweils an einen eigenen Tastereingang des Mikrocontrollers 1 angeschlossen. Auf diese Weise ist für den Mikrocontroller 1 eine Identifikation des jeweils manuell betätigten Tastsensors möglich.

Teil der Triggerschaltung 3 ist eine elektronische Schaltereinheit 8, die in dem gezeigten Ausführungsbeispiel zwei CMOS-Transistoren umfasst. Neben der elektronischen Schaltereinheit 8 ist Teil der Triggerschaltung 3 ferner ein RS-Flip-Flop 9. Der Set-Eingang S des Flip-Flops 9 ist an den Eingang 7 der Triggerschaltung 3 angeschlossen. Der Ausgang Q ist an einen Eingang 10 der elektronischen Schaltereinheit 8 angeschlossen. Der Mikrocontroller 1 umfasst ferner einen Abschaltausgang 11, der an den Reset-Eingang R des Flip-Flops 9 angeschlossen ist. Der Mikrocontroller 1 verfügt des Weiteren über einen VDD-Eingang 12, der mit dem gezeigten VDD-Zweig 13 in nicht näher dargestellter Art und Weise verbunden ist. Der Set-Eingang S und der Ausgang Q des Flip-Flops 9 sind durch eine Kurzschussleitung 14 kurzgeschlossen.

Bei dem in den Figuren beispielhaft beschriebenen Bediengerät ist der Mikrocontroller 1 mit seinen daran geknüpften Komponenten, wie beispielsweise seinem Transceiver und dem RC-Oszillator 4 der Stromverbraucher. Es versteht sich, dass das Bediengerät weitere Stromverbraucher aufweisen kann. Für diese geltend die nachfolgenden Beschreibungen gleichermaßen. Figur 1 zeigt die Schaltungsanordnung im Ruhe-Modus des Bediengerätes. Da der Tastsensor 5 geöffnet ist, sind der Mikrocontroller 1 und die weiteren diesbezüglichen Stromverbraucher ebenso stromlos geschaltet wie die Triggerschaltung 3. In dem Ruhe-Modus wird somit kein Strom der Batterie 2 verbraucht.

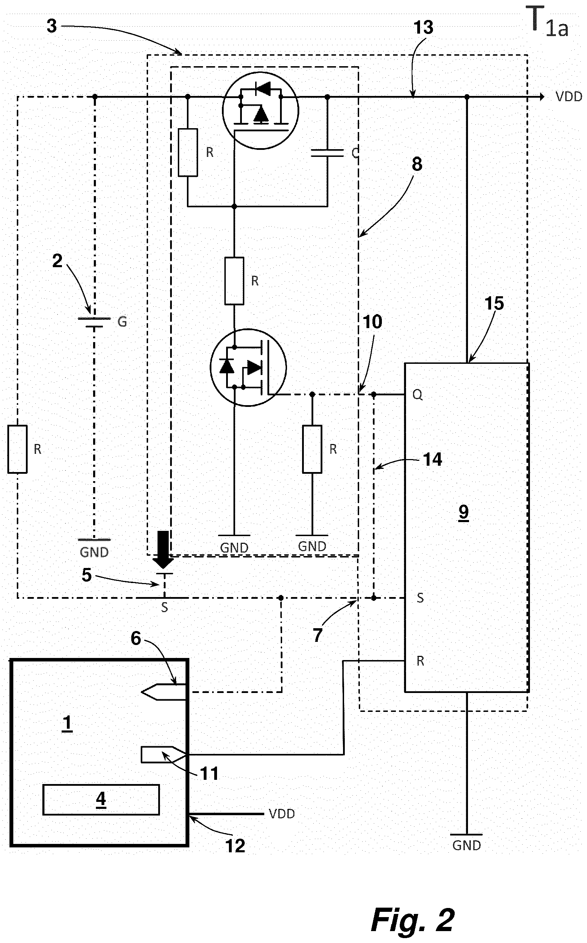

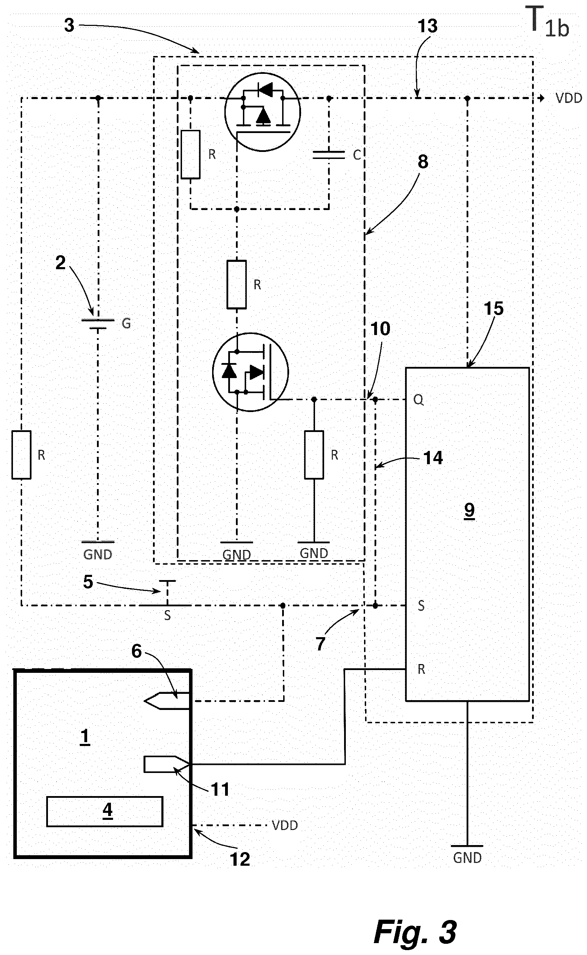

Soll mittels des Bediengerätes ein Ansteuerbefehl abgesetzt werden, wird einer der Sensoren - hier der Tastsensor 5 - manuell betätigt. Diese Situation ist in Figur 2 gezeigt. Nach Schließen des Tastsensors 5 liegt am Tastereingang 6 des Mikrocontrollers 1 ebenso wie aufgrund der Kurzschlussleitung 14 an dem Eingang 10 der elektronischen Schaltereinheit 8 Strom an. Selbiges gilt für den Set-Eingang S des Flip-Flops 9. Die stromführenden elektrischen Verbindungen sind in den Figuren strichpunktiert dargestellt. Durch die Strombeaufschlagung des Eingangs 10 der elektronischen Schaltereinheit 8 wird diese zum eigentlichen Einschalten des Stromflusses betätigt mit der Folge, dass durch diesen Schaltvorgang der VDD-Zweig 13 der Schaltungsanordnung stromführend wird. Ist die elektronische Schaltereinheit 8 durchgeschaltet, was quasi spontan erfolgt, ist auch der Mirkocontroller 1 mit seinen weiteren Stromverbrauchern über seinen VDD-Eingang 12 bestromt (s. Figur 3). In Folge dessen fährt der Mikrocontroller 1 mit seinen weiteren Stromverbrauchern insbesondere dem RC-Oszillator 4 hoch. Beim Hochfahren des Mikrocontrollers 1 greift dieser auf den ihm zugeordneten nicht-flüchtigen Speicher zu und arbeitet die diesbezügliche Routine. Der RC-Oszillator 4 ist ebenfalls quasi spontan eingeschwungen, so dass unmittelbar nach der Bestromung des Mikrocontrollers 1 der Tastereingang 6 ausgelesen und der an eine Betätigung des Tastsensors 5 geknüpfte Ansteuerbefehl abgesetzt werden kann. Der dafür abzuarbeitende Funk-Stack ist ebenfalls in dem nicht-flüchtigen Speicher hinterlegt.

Das Flip-Flop 9 ist mit seinem Stromeingang 15 ebenfalls an den VDD-Zweig 13 angeschlossen. Nach Durchschalten der elektronischen Schaltereinheit 8 ist somit auch das Flip-Flop 9 betriebsbereit. Aufgrund der Strombeaufschlagung des Set-Einganges S wird dessen Ausgang Q auf eine logische 1 gesetzt. Durch das Flip-Flop 9 ist somit eine Bestromung der elektronischen Schaltereinheit 8 und des Mikrocontrollers 1 mit seinen weiteren Stromverbrauchern sichergestellt, auch wenn der Tastsensor 5 geöffnet wird. Typischerweise wird der Tastsensor 5 nur für eine kurze Zeit, wie dieses bei Tastsensoren typischerweise vorgenommen wird, betätigt.

Der Vorgang des Hochfahrens des Mikrocontrollers 1, dem Auslesen seines Tastereinganges 6 und das Absetzen eines Ansteuerbefehls über den Transceiver an einen Aktor einer Gebäudeinstallation, beispielsweise die Beleuchtungseinrichtung eines Raumes erfolgt in weniger als 100 ms. Somit ist die Reaktion des Bediengerätes auf den ausgelösten Bedienwunsch eines Benutzers für diesen ohne Verzögerung wahrnehmbar.

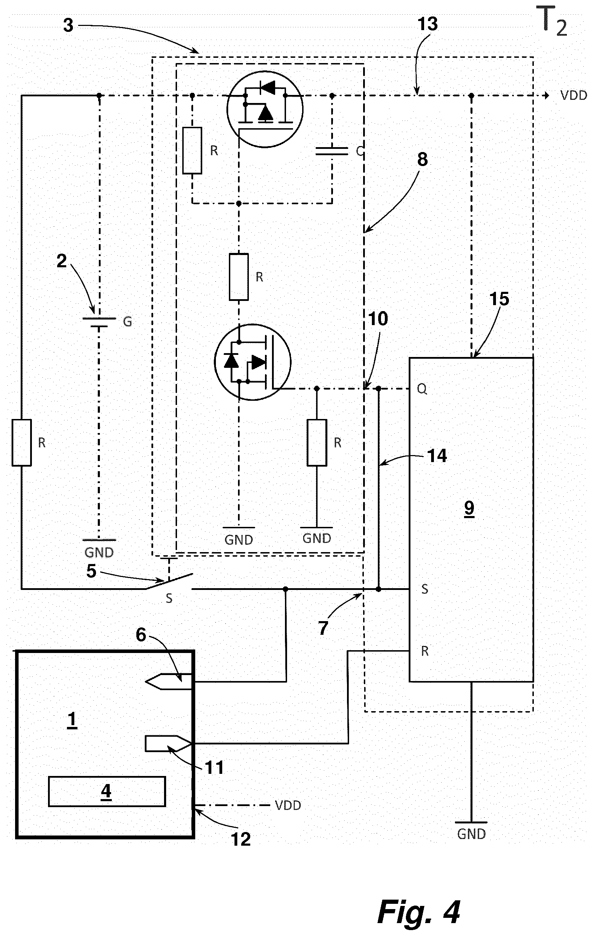

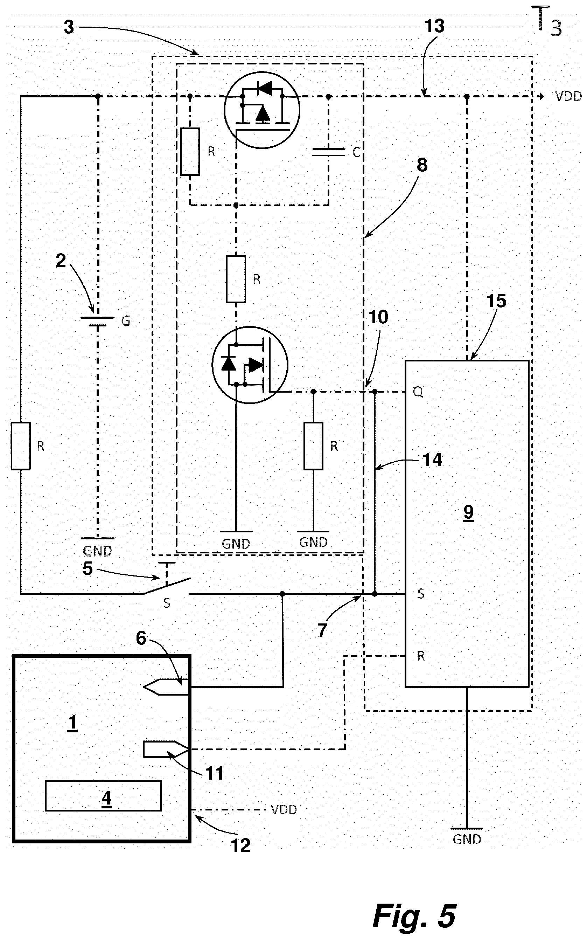

Ist der an eine Betätigung des Tastsensors 5 geknüpfte Ansteuerbefehl abgesetzt, schaltet der Mikrokontroller 1 das Bediengerät in einen Überwachungs-Modus, bei dem der Stromverbrauch gegenüber seinen Bedien-Modus, in dem sich das Bediengerät befindet, wenn ein Ansteuerbefehl abgesetzt wird, reduziert ist (siehe Figur 4). In dem Überwachungs-Modus ist bei dem dargestellten Ausführungsbeispiel das Transceiver-Modul deaktiviert. Ist die vorgegebene Zeitspanne, von beispielsweise 10 bis 20 Sekunden abgelaufen, wird an dem Abschaltausgang 11 des Mikrocontrollers 1 ein Abschaltsignal an den Reset-Eingang R des Flip-Flops 9 gelegt. Das Flip-Flop 9 setzt auf seinen Ausgang Q daraufhin eine logische 0, wodurch die elektronische Schalteinrichtung 8 das Ansteuersignal zum Umschalten erhält. Dieser Vorgang ist in Figur 5 gezeigt. Ist die elektronische Schalteinrichtung 8 umgeschaltet, sind sämtliche Stromverbraucher des Bediengerätes 1 stromlos geschaltet, wie dieses in der Darstellung der Figur 1 gezeigt ist.

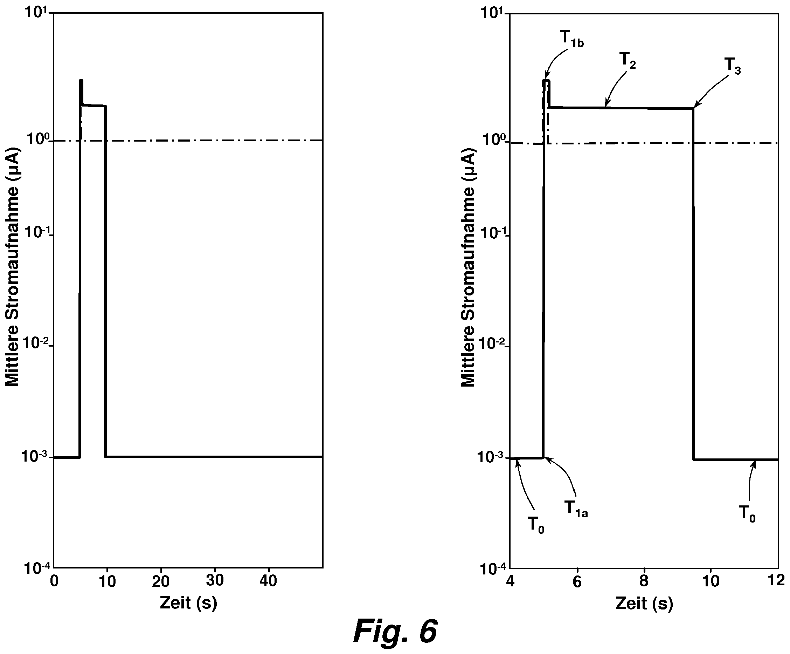

Figur 6 zeigt ein Diagramm der mittleren Stromaufnahme über die Zeit bei einem Betrieb des vorbeschriebenen Bediengerätes. Die in Figur 6 rechte Darstellung zeigt die einzelnen Schritte in einer etwas größeren zeitlichen Auflösung. Die in Figur 6 gezeigte Gegenüberstellung der mittleren Stromaufnahme des Bediengerätes gemäß der Erfindung (durchgezogene Kurve) im Vergleich zu der Stromaufnahme eines herkömmlichen Bediengerätes (strichpunktierte Kurve) mit bereits einem effektiven Sleep-Modus macht deutlich, wie signifikant der Stromverbrauch durch das Bediengerät gemäß der Erfindung reduziert werden konnte. Die mittlere Stromaufnahme ist auf der y-Achse logarithmisch aufgetragen. Erkennbar ist die Stromeinsparung bei dem erfindungsgemäßen Bediengerät sowie bei Durchführen des erfindungsgemäßen Verfahrens um einen Faktor von etwa 1000 geringer als die mittlere Stromaufnahme bei herkömmlichen Bediengeräten.

In dem rechten Diagramm der Figur 6 sind die Zeitpunkte der Zustände der Schaltungen der Figuren 1 bis 5 eingetragen, und zwar anhand ihrer in den vorgenannten Figuren oben rechts aufgezeigten Zeit-Kodierung (T₀, T₁ₐ, T_{1b}, T₂, T₃).

Die Erfindung ist anhand eines Ausführungsbeispiels beschrieben worden. Ohne den Umfang der geltenden Ansprüche zu verlassen, ergeben sich für einen Fachmann zahlreiche weitere Ausgestaltungen, im Rahmen der geltenden Ansprüche die Erfindung umsetzen zu können.

### Bezugszeichenliste

- 1: Mikrocontroller
- 2: Batterie
- 3: Triggerschaltung
- 4: RC-Oszillator
- 5: Tastsensor
- 6: Tastereingang
- 7: Eingang
- 8: elektronische Schaltereinheit
- 9: RS-Flip-Flop
- 10: Eingang
- 11: Abschaltausgang
- 12: VDD-Eingang
- 13: VDD-Zweig
- 14: Kurzschlussleitung
- 15: Stromeingang
- Q: Ausgang
- R: Reset-Eingang
- S: Set-Eingang

## Patentansprüche

1. Verfahren zum Betreiben eines als Stand-alone-Gerät ausgelegten batteriebetriebenen, einen Mikrocontroller (1) aufweisenden Bediengerätes als Teil einer Gebäudeinstallation, bei welchem Verfahren das Bediengerät zum Reduzieren seines Stromverbrauchs in unterschiedliche Modi geschaltet wird, von denen ein erster Modus des Bediengerätes derjenige Modus ist, in dem der oder die an eine manuelle Sensorbetätigung geknüpften Befehle abgesetzt werden, und von denen ein zweiter Modus ein Ruhe-Modus ist, in den das
Bediengerät nach Abschluss der ausgeführten Aktion geschaltet wird,
• wobei zum Erreichen des Ruhe-Modus alle Stromverbraucher einschließlich des Mikrocontrollers (1) des Bediengerätes stromlos geschaltet werden, **dadurch gekennzeichnet**
• **dass** im Ruhe-Modus die Schaltstellung eines mechanischen Sensors oder mechanischen Sensoren mittels einer ein Flip-Flop (9) und eine elektronische Schaltereinheit (8) aufweisenden Triggerschaltung (3) überwacht wird und
• **dass** als Folge einer manuellen Betätigung des Sensors (5) der Eingang der elektronischen Schaltereinheit (8) über eine zwischen dem Set-Eingang (S) und dem Ausgang (Q) des Flip-Flops (9) angeordnete Kurzschlussleitung (14) mit Strom beaufschlagt wird, der Microcontroller (1) und die Stromverbraucher hierdurch bestromt werden, das Flip-Flop (9) betriebsbereit wird und der Ausgang (Q) des Flip-Flops (9) auf eine logische 1 gesetzt wird, sodass die Bestromung auch bei einem geöffneten Sensor (5) sichergestellt bleibt und dann die durch die Sensorbetätigung gewünschte Aktion ausgeführt wird,
• bevor das Bediengerät wieder in seinen Ruhe-Modus geschaltet wird, indem der Ausgang (Q) des Flip-Flops (9) auf
eine logische 0 gesetzt wird, wodurch die elektronische Schaltereinheit (8) das Ansteuersignal zum Umschalten erhält.

2. Verfahren nach Anspruch 1 **dadurch gekennzeichnet, dass** die Taktfrequenz für die elektronischen Komponenten des Bediengerätes durch einen RC-Oszillator (4) bereitgestellt wird.

3. Verfahren nach Anspruch 1 oder 2, **dadurch gekennzeichnet, dass** nach Ausführen einer durch eine Sensorbetätigung gewünschten Aktion das Bediengerät für eine vorgegebene Zeitspanne in einem Überwachungs-Modus, in dem der Stromverbrauch gegenüber dem Betriebs-Modus reduziert ist, geschaltet wird, bevor nach Ablauf dieser Zeitspanne ohne zwischenzeitliches Detektieren einer weiteren Sensorbetätigung das Bediengerät in seinen Ruhe-Modus geschaltet wird.

4. Batteriebetriebenes Bediengerät zum Bedienen einer Gebäudeinstallation, welches Bediengerät zumindest einen manuell betätigbaren Sensor (5), einen Mikrocontroller (1), einen Sender zum Übermitteln eines Bedienbefehls sowie als Stromquelle eine Batterie (2) umfasst, welches Bediengerät zum Reduzieren seines Stromverbrauchs in unterschiedliche Modi schaltbar ist, von denen ein erster Modus derjenige Modus ist, in dem der oder die an eine manuelle Sensorbetätigung geknüpften Befehle abgesetzt werden, und von denen ein zweiter Modus ein Ruhe-Modus ist, in dem die Stromverbraucher des Bediengerätes stromlos geschaltet sind, wobei das Bediengerät eine Triggerschaltung (3) aufweist, durch die bei einer Sensorbetätigung eines mechanischen Sensors (5) im Ruhe-Modus des Bediengerätes die in diesem Modus stromlosen Verbraucher bestromt werden, und dass der Mikrocontroller (1) Zugriff auf einen nicht-flüchtigen Speicher hat, in dem eine Routine zum Hochfahren des Mikrocontrollers (1) und/oder Betriebsparameter abgelegt sind, **dadurch gekennzeichnet dass**, die Triggerschaltung (3) eine elektronische Schaltereinheit (8) und ein Flip-Flop (9) umfasst, an dessen Set-Eingang (S) der Sensor (5) angeschlossen ist, sodass eine Sensorbetätigung diesen Eingang (S) mit einer logischen 1 belegt, und an dessen Ausgang (Q) der eine Anschluss der elektronischen Schalteinrichtung (8) anliegt, wobei zwischen dem Set-Eingang (S) und dem Ausgang (Q) des Flip-Flops (9) eine Kurzschluss-Leitung (14) angeordnet ist, wobei der Mikrocontroller (1) eine Abschaltschnittstelle (11) zum Ausgeben eines Abschaltsignals aufweist, die an dem Reset-Eingang (R) des Flip-Flops (9) anliegt.

5. Bediengerät nach Anspruch 4, **dadurch gekennzeichnet, dass** das Flip-Flop als RS-Flip-Flop (9) ausgeführt ist.

6. Bediengerät nach einem der Ansprüche 4 bis 5, **dadurch gekennzeichnet, dass** das Bediengerät einen Funkempfänger umfasst.

7. Bediengerät nach einem der Ansprüche 4 bis 6, **dadurch gekennzeichnet, dass** das Bediengerät mehrere Tastsensoren (5) als mechanische Sensoren aufweist.

## Claims

1. Method for operation of a battery-powered control device designed as stand-alone-device with microcontroller (1) as part of a building installation system, in which method the control device is switched into different modes in order to reduce its power consumption, of which a first mode of the control device is the mode in which the command or commands linked to a manual sensor actuation are issued, and of which a second mode is a sleep mode into which the control device is switched after completion of the action carried out, all current consumers including the microcontroller (1) of the control device being switched off to reach the sleep mode, **characterized by** the fact
• that in sleep mode the switching position of a mechanical sensor or mechanical sensors is monitored by means of a trigger circuit (3) having a flip-flop (9) and an electronic switching unit (8) and
• that as a result of a manual actuation of the sensor (5) the input of the electronic switching unit (8) is supplied with current via a short-circuit line (14) arranged between the set input (S) and the output (Q) of the flip-flop (9), the microcontroller (1) and the current consumers are thereby supplied with current, the flip-flop (9) gets ready for operation and the output (Q) of the flip-flop (9) is set to a logic 1, so that the current supply remains ensured even with an open sensor (5) and then the action requested by actuating the sensor is carried out,
• before the control device is switched back to its sleep mode by setting the output (Q) of the flip-flop (9) to a logic 0, whereby the electronic switching unit (8) receives the control signal for switching.

2. Method in accordance with Claim 1, **characterized by the fact** that the pulse frequency for the electronic components of the control device is provided by an RC-oscillator (4).

3. Method in accordance with Claim 1 or 2, **characterized by the fact** that after carrying out an action requested by actuating a sensor, the control device is switched into a monitoring mode for a predetermined period of time, in which the power consumption is reduced with respect to the operating mode, before the control device is switched into sleep mode after this period of time has lapsed without any further sensor actuation being detected in the meantime.

4. Battery-powered control device for operation of a building installation system, which control device comprises at least one manually operable sensor (5), a microcontroller (1), a transmitter for transmitting a control command and a battery (2) as power source, which control device can be switched into different modes in order to reduce its power consumption, a first mode of which is that mode in which the command or commands linked to a manual sensor actuation are issued, and of which a second mode is a sleep mode in which the current consumers of the control device are switched off, the control device providing a trigger circuit (3), by means of which, in the event of a sensor actuation of a mechanical sensor (5) in the sleep mode of the control device, the switched-off consumers in this mode are energized, and that the microcontroller (1) has access to a non-volatile memory, in which a routine for booting the microcontroller (1) and/or the operating parameters are stored, **characterized by the fact** that the trigger circuit (3) comprises an electronic switch unit (8) and a flip-flop (9), to whose set input (S) the sensor (5) is connected, so that a sensor actuation assigns a logic 1 to this input (S), and to the output (Q) of which the electronic switch unit (8) is connected, a short-circuit line (14) being arranged between the set input (S) and the output (Q) of the flip-flop (9), the microcontroller (1) providing a switch-off interface (11) at the reset input (R) of the flip-flop for outputting a switch-off signal.

5. Control device in accordance with Claim 4, **characterized by the fact** that the flip-flop is designed as RS flip-flop (9).

6. Control device in accordance with any of Claims 4 to 5, **characterized by the fact** that the control device comprises a radio receiver.

7. Control device in accordance with any of Claims 4 to 6, **characterized by the fact** that the control device provides several push-button sensors (5) as mechanical sensors.

## Revendications

1. Procédé pour faire fonctionner un dispositif de commande alimenté par batterie conçu comme dispositif autonome et comportant un microcontrôleur (1) dans le cadre d'une installation de bâtiment, procédé dans lequel le dispositif de commande est commuté dans différents modes afin de réduire sa consommation électrique, dont un premier mode du dispositif de commande est le mode, dans lequel la ou les commandes liées à un actionnement manuel du capteur sont émises, et dont un second mode est un mode de repos, dans lequel le dispositif de commande est commuté après achèvement de l'action effectuée, tous les consommateurs de courant y compris le microcontrôleur (1) du dispositif de commande étant coupés pour atteindre le mode de repos, **caractérisé en ce que**
• en mode de repos, la position de commutation d'un ou de plusieurs capteurs mécaniques est surveillée au moyen d'un circuit de déclenchement (3) comportant une bascule (9) et une unité de commutation électronique (8) et
• à la suite d'un actionnement manuel du capteur (5), un courant est appliqué à l'entrée de l'unité de commutation électronique (8) via une ligne de court-circuit (14) disposée entre l'entrée réglée (S) et la sortie (Q) de la bascule (9), le microcontrôleur (1) et les consommateurs de courant sont ainsi alimentés, la bascule (9) devient prête à fonctionner et la sortie (Q) de la bascule (9) est réglée sur un 1 logique afin que l'alimentation reste assurée même avec un capteur ouvert (5) et qu'ensuite l'action souhaitée par l'actionnement du capteur soit effectuée,
• avant que l'appareil de commande ne revienne en mode de repos en réglant la sortie (Q) de la bascule (9) sur une 0 logique, l'unité de commutation électronique (8) recevant alors le signal de commande pour la commutation.

2. Procédé selon la revendication 1, **caractérisé en ce que** la cadence pour les composants électroniques du dispositif de commande est fournie par un oscillateur RC (4).

3. Procédé selon la revendication 1 ou 2, **caractérisé en ce que,** après l'exécution d'une action souhaitée par un actionnement de capteur, le dispositif de commande est commuté pendant une durée prédéterminée dans un mode de surveillance, dans lequel la consommation électrique est réduite par rapport au mode de fonctionnement, avant que le dispositif de commande soit commuté dans son mode de repos après cette période de temps sans autre déclenchement de capteur détecté entre-temps.

4. Dispositif de commande alimenté par batterie pour faire fonctionner une installation de bâtiment, lequel dispositif de commande comprend au moins un capteur (5) à commande manuelle, un microcontrôleur (1), un émetteur pour transmettre un ordre de commande ainsi qu'une batterie (2) comme source d'alimentation, lequel dispositif de commande peut être commuté dans différents modes afin de réduire sa consommation électrique, dont un premier mode est ce mode, dans lequel la ou les commandes liées à une commande manuelle d'un capteur sont émises, et dont un deuxième mode est un mode de repos, dans lequel les consommateurs de courant du dispositif de commande sont coupés, le dispositif de commande comportant un circuit de déclenchement (3), au moyen duquel, en cas de déclenchement par capteur d'un capteur mécanique (5) dans le mode de repos du dispositif de commande, les consommateurs de courant qui sont coupés dans ce mode sont excités, et que le microcontrôleur (1) a accès à une mémoire non volatile dans laquelle une routine de démarrage du microcontrôleur (1) et/ou des paramètres de fonctionnement sont mémorisés, **caractérisé en ce que** le circuit de déclenchement (3) comprend une unité de commutation électronique (8) et une bascule (9), à l'entrée (S) réglée de laquelle le capteur (5) est connecté, afin qu'une commande par capteur occupe cette entrée (S) avec un 1 logique, et à la sortie (Q) de laquelle le dispositif de commutation électronique (8) est connecté, une ligne de court-circuit (14) étant disposée entre l'entrée réglée (S) et la sortie (Q) de la bascule (9), le microcontrôleur (1) présentant une interface de débranchement (11) connectée à l'entrée de réinitialisation (R) de la bascule (9) pour émettre un signal de débranchement.

5. Dispositif de commande selon la revendication 4, **caractérisé en ce que** la bascule est conçue comme une bascule RS (9).

6. Dispositif de commande selon l'une des revendications 4 à 5, **caractérisé en ce que** le dispositif de commande comprend un récepteur radio.

7. Dispositif de commande selon l'une des revendications 4 à 6, **caractérisé en ce que** le dispositif de commande comporte plusieurs capteurs tactiles (5) comme capteurs mécaniques.
